# EUROPÄISCHE PATENTSCHRIFT

(11) **EP 0 710 584 B1**
(45) Veröffentlichungstag und Bekanntmachung des Hinweises auf die Patenterteilung: **25.11.1998**
(21) Anmeldenummer: 95113998.9
(22) Anmeldetag: 06.09.1995
(51) Int. Cl.: B60P 3/075

(54) **Arretiervorrichtung**
Locking device
Dispositif d'arrêt

(30) Priorität: 07.11.1994 DE 9417804 U
(43) Veröffentlichungstag der Anmeldung: 08.05.1996
(73) Patentinhaber: Kässbohrer Transport Technik GmbH, 5020 Salzburg (AT)
(72) Erfinder: Rappold, Andreas, Ing., A-4880 St. Georgen (AT); Schnäller, Michael, Ing., A-5020 Salzburg (AT); Wörndl, Matthias, Ing., A-5431 Kuchl (AT)
(74) Vertreter: Grünecker, Kinkeldey, Stockmair & Schwanhäusser Anwaltssozietät

(56) Entgegenhaltungen:
- DE-U- 9 215 181
- GB-A- 1 481 691

## Beschreibung

Die Erfindung betrifft eine Arretiervorrichtung zur lösbaren Befestigung an Fahrschienen eines Fahrzeugtransporters mit einem im wesentlichen horizontal verlaufenden Sperrholm, zwei seitlich davon abstehenden Seitenarmen, einer auf den Fahrschienen aufstellbaren Aufstandsfläche und zwei Befestigungselementen, von denen wenigstens eines verschwenkbar gelagert ist.

Eine solche aus der Praxis vorbekannte Arretiervorrichtung wird auf den Fahrschienen derart befestigt, daß Vorderräder und Hinterräder eines auf dem Fahrzeugtransporters befindlichen Fahrzeugs gegenüber einer Bewegung in Fahrtrichtung gesichert sind. Dabei fährt das Fahrzeug in der Regel mit seinen Vorderrädern an Sperrholme von zwei Arrtiervorrichtungen heran. Danach werden entsprechende Arretiervorrichtungen zur Sicherung der Hinterräder am Heck dieses Fahrzeuges an den Fahrschienen des Fahrzeugtransporters befestigt.

Die vorbekannte Arretiervorrichtung weist außer dem Sperrholm und den Seitenarmen im wesentlichen dreieckförmige Seitenplatten, gegenüberliegend zum Sperrholm zwischen den Seitenplatten verlaufende L-förmige Querprofile, an den Querprofilen angeordnete beziehungsweise verschwenkbar gelagerte Befestigungselemente und in der Regel zusätzliche zwischen den Seitenplatten und den Querprofilen verlaufende Versteifungsstreben auf. Auf der Unterseite der Querprofile und durch die Unterkante der Seitenplatten sind entsprechende Aufstandsflächen gebildet, mit der die Arretiervorrichtung auf den Fahrschienen aufstellbar ist. Alle vorgenannten Bauteile der Arretiervorrichtung sind einzeln hergestellt und danach miteinander verschweißt. Die Seitenarme sind beispielsweise mit ihren freien Enden benachbart zu den Seitenplatten sowohl am Sperrholm als auch an einem Querprofil angeschweißt. Durch die vielen und zum Teil massiven metallischen Einzelteile ist die vorbekannte Arretiervorrichtung recht schwer und unhandlich.

Die Merkmale des Oberbegriffes von Anspruch 1 aufweisende Arretiervorrichtungen sind auch durch DE-U-92 15 181.7 und GB-A-1 481 691 bekannt.

Der Erfindung liegt die Aufgabe zugrunde, eine Arretiervorrichtung der eingangs genannten Art dahingehend zu verbessern, daß die Herstellung bei gleichzeitiger Gewichtsreduzierung vereinfacht ist. Diese Aufgabe wird dadurch gelöst, daß Sperrholm und Seitenarme einteilig aus einem rohrförmigen Profil gebildet sind. Dadurch ist zumindest die Herstellung von Sperrholm und Seitenarme vereinfacht und durch die Verwendung eines rohrförmigen Profils wird gleichzeitig das Gewicht der Arretiervorrichtung reduziert. Das rohrförmige Profil bildet bei Anordnung der Arretiervorrichtung auf einem KFZ-Transporter den Vorteil, daß bei mit Frontspoilern ausgestatteten Fahrzeugen die Montage erheblich einfacher ist. Die Arretiervorrichtung kann nicht nur wie üblich von der Seite, sondern aufgrund ihrer gebogenen Struktur auch von vorne montiert werden, wodurch der KFZ-Transporter erheblich schneller und kostengünstiger be- und entladen werden kann.

Vorteilhafterweise werden Seitenarme und Sperrholm direkt aus einem rohrförmigen Profil gebogen. Unter Verzicht auf einige Vorteile der Erfindung können beispielsweise die Seitenarme und der Sperrholm getrennt aus einem rohrförmigen Profil hergestellt und darauffolgend miteinander verschweißt werden. Ebenso ist es möglich, einen Seitenarm mit einem halben Sperrholm durch Biegen eines rohrförmigen Profils herzustellen und mit einem entsprechenden Gegenstück aus weiterem Seitenarm und halbem Sperrholm beispielsweise durch Verschweißen zu verbinden.

Um weiterhin die Herstellung zu vereinfachen und die Arretiervorrichtung leichter zu gestalten, ist es weiterhin von Vorteil, wenn die Befestigungselemente direkt an den Seitenarmen angeordnet sind.

In diesem Zusammenhang ist es weiterhin günstig, wenn die Aufstandsfläche durch Unterseiten der Seitenarme gebildet ist. Auf diese Weise kann auf die L-förmige Querprofile oder auf andere zwischen den Seitenarmen außer dem Sperrholm verlaufende Einzelteile der Arretiervorrichtung verzichtet werden.

Um die Herstellung der Arretiervorrichtung weiterhin zu vereinfachen, sind die Seitenarme im wesentlichen U-förmig gebogen, wobei ein oberer U-Schenkel mit dem Sperrholm verbunden ist und ein unterer U-Schenkel auf seiner Unterseite die Aufstandsfläche aufweist. Auf diese Weise kann auf weitere, eine Aufstandsfläche aufweisende Verbindungen zwischen den Seitenarmen verzichtet werden.

Im einfachsten Fall stehen die Seitenarme im wesentlichen senkrecht vom Sperrholm ab. Dabei kann die zwischen den U-Schenkeln der Seitenarme ausgebildete U-Öffnung sowohl in Richtung zum zu transportierenden Fahrzeug als auch von diesem weg weisen. Weiterhin kann die U-Öffnung zum Einhängen der Arretiervorrichtung beispielsweise an entsprechenden Einrichtungen am Fahrzeugtransporter dienen. Vorzugsweise sind die U-förmigen Seitenarme in Richtung vom zu transportierenden Fahrzeug weg geöffnet.

Um auf den Sperrholm ausgeübte Kräfte sicher in die Fahrzeugschiene einzuleiten, ist es weiterhin von Vorteil, wenn der untere U-Schenkel länger als der obere U-Schenkel ausgebildet ist. Dadurch erhält man eine relativ große Aufstandsfläche.

In der Regel werden eine Anzahl von Arretiervorrichtungen in Längsrichtung des Fahrzeugtransporters hintereinander an den Seiten der Fahrschienen gelagert, wenn sie nicht zur Arretierung von Fahrzeugen auf den Fahrschienen benötigt werden. Dabei weist der Sperrholm in Richtung zu den Fahrschienen, wobei die U-förmigen Seitenarme ebenfalls in Richtung zu den Fahrschienen geöffnet sind. Die zu transportierenden Fahrzeuge werden zwischen den seitlich angeordneten Arretiervorrichtungen auf die Fahrschienen aufgefahren. Fährt in diesem Zusammenhang beispielsweise ein Vorderreifen eines solchen Fahrzeugs auf eine solche Arretiervorrichtung auf, so ist es von Vorteil, wenn Endabschnitte des Sperrholms gegenüber seinem Mittelabschnitt unter einem spitzen Horizontalwinkel in Richtung zum U-Steg der Seitenarme geneigt verlaufen. Auf diese Weise bilden die Endabschnitte im Prinzip Einweisenden, die die Räder des zu transportierenden Fahrzeugs in Richtung Fahrzeugschiene und in Richtung zum Mittelabschnitt des Sperrholms führen. Der Horizontalwinkel beträgt dabei 5° bis 25° und vorzugsweise 15°.

Diese Einweiswirkung der Endabschnitte wird dadurch verbessert, daß die Endabschnitte gegenüber dem Mittelabschnitt des Sperrholms unter einem spitzen Vertikalwinkel in Richtung zum unteren U-Schenkel geneigt verlaufen. Dieser Vertikalwinkel beträgt zwischen 0° und 20°, vorzugsweise 10°.

Gleichzeitig wird durch den Vertikalwinkel die Bauhöhe der Arretiervorrichtung, insbesondere im Bereich der Seitenarme vermindert, wodurch weniger Material benötigt wird.

Aus den gleichen Gründen wie vorangehend bezüglich Horizontal- und Vertikalwinkel ausgeführt, kann der Sperrholm auch ohne zu einem Mittelabschnitt geneigte Endabschnitte ausgebildet sein. Stattdessen ist der Sperrholm über seine gesamte Länge gekrümmt. Diese Krümmung kann in Richtung der Seitenarme nach unten und/oder in Richtung des U-Stegs der Seitenarme nach hinten ausgebildet sein. Der Sperrholm ist vorzugsweise symmetrisch zu einer mittig zwischen dem Seitenarm verlaufenden Mittelebene ausgebildet. Dadurch steht der Sperrholm in der Mittelebene am weitesten nach oben und nach vorne gegenüber den Seitenarmen vor.

Um die Aufstandsfläche zu vergrößern und damit die Standfestigkeit der Arretiervorrichtung zu verbessern, ist es weiterhin von Vorteil, wenn freie Enden der unteren U-Schenkel über den Mittelabschnitt des Sperrholms vorstehen. Diese können so ausgebildet sein, daß ein Überfahren bei seitlich zu den Fahrschienen angeordneten Arretiervorrichtungen durch Räder des zu transportierenden Fahrzeugs in einfacher Weise möglich ist.

In diesem Zusammenhang ist es insbesondere günstig, wenn das rohrförmige Profil der Arretiervorrichtung an den freien Enden der unteren U-Schenkel flachgedrückt ist. Dadurch ist einmal ein Überfahren leicht möglich und gleichzeitig kann das Innere des rohrförmigen Profils auf diese Weise verschlossen werden. Dadurch wird beispielsweise das Eindringen von Feuchtigkeit oder dergleichen verhindert.

Eine einfache Möglichkeit zur lösbaren Befestigung der Arretiervorrichtung an den Fahrschienen ist dadurch gegeben, daß die Befestigungselemente als Eingriffshaken ausgebildet sind. Ein Eingriffshaken wird beim Anordnen der Arretiervorrichtung in eine entsprechende Öffnung der Fahrschiene eingesetzt, während ein verschwenkbarer Eingriffshaken zum Verriegeln der Arretierungsvorrichtung in entsprechender Weise in eine weitere Öffnung der Fahrschiene eingesetzt wird.

Je nach Ausbildungsform der Fahrschienene und der entsprechenden Öffnungen in dieser sind die Eingriffshaken in bestimmter Höhe an den Seitenarmen angeordnet. Eine einfache Ausführungsform zeichnet sich dadurch aus, daß die Eingriffshaken zumindest teilweise über die Aufstandsfläche nach unten in Richtung Fahrschiene vorstehen.

Um den verschwenkbaren Eingriffshaken einfach betätigen zu können, ist an diesem ein Verschwenkhebel angeordnet.

Um insbesondere die unteren U-Schenkel mit ihrer Aufstandsfläche an den Fahrschienen zu sichern, erweist es sich als günstig, wenn die Eingriffshaken am unteren U-Schenkel angeordnet beziehungsweise verschwenkbar gelagert sind.

Um eine einfache Handhabung der Arretiervorrichtung zu gewährleisten, ist es weiterhin günstig, wenn der verschwenkbare Eingriffshaken in Eingriffsrichtung federbelastet ist. Der verschwenkbare Eingriffshaken wird quasi automatisch nach dem Freigeben des Verschwenkhebels durch einen Benutzer in Eingriffsstellung verschwenkt.

Ein einfacher Verschwenkhebel zeichnet sich dadurch aus, daß dieser im wesentlichen L-förmig ist, wobei der kürzere L-Schenkel am Eingriffshaken befestigt ist. Durch den längeren L-Schenkel kann der Eingriffshaken beispielsweise gegen die Federbelastung in Öffnungsstellung mit relativ geringem Kraftaufwand verschwenkt werden.

Eine einfache und leicht herzustellende Verbindung zwischen Verschwenkhebel und Eingriffshaken ist dadurch gegeben, daß ein freies Ende des kürzeren L-Schenkels seitlich am Eingriffshaken befestigt ist.

Um den längeren L-Schenkel des Verschwenkhebels geschützt anzuordnen, ist es weiterhin günstig, wenn dieser in Eingriffsstellung im wesentlichen parallel zum Mittelabschnitt des Sperrholms verläuft. Somit steht der Verschwenkhebel beispielsweise nicht unter einem spitzen Winkel in Richtungeines zu transportierenden Fahrzeugs ab.

Um eine leichte Ein-Hand-Betätigung der Arretiervorrichtung zu ermöglichen, liegt der längere L-Schenkel in Öffnungsstellung des verschwenkten Eingriffshakens von unten am Mittelabschnitt des Sperrholms an. Somit kann durch gleichzeitiges Umfassen von Verschwenkhebel und Sperrholm die Arretiervorrichtung mit einer Hand an den Fahrschienen angeordnet, beziehungsweise von diesen gelöst werden.

Zur einfachen verschwenkbaren Lagerung des Eingriffshakens ist dieser an einer von einem unteren U-Schenkel gehalterten Schwenkachse gelagert. Die Schwenkachse kann beispielsweise zwischen zwei vom unteren U-Schenkel abstehenden Lagerflanschen angeordnet sein.

Um die Federbelastung des schwenkbaren Eingriffshakens in einfacher Weise zu realisieren, steht die Schwenkachse zumindest mit einem Endabschnitt benachbart zum kürzeren L-Schenkel über den Eingriffshaken vor und ist an diesem Endabschnitt ein Federelement zur Federbelastung des Eingriffshakens in Eingriffsrichtung angeordnet.

Ein solches Federelement kann beispielsweise eine Spiralfeder sein, die zwischen dem kürzeren L-Schenkel und dem unteren U-Schenkel festgelegt ist. Beim Auslenken des Verschwenkhebels in Öffnungsstellung wird die Feder gespannt und drückt beim Freigeben des Verschwenkhebels den Eingriffshaken selbsttätig in Eingriffsstellung.

Um bei einer Anordnung der Arretiervorrichtungen in Bereitschaftsstellung an den Seiten der Fahrschienen sicherzustellen, daß diese nur in einer Stellung anordbar sind, sind die Eingriffshaken in einem geringerem Abstand zur Rückseite des U-Stegs als zum freien Ende des unteren U-Schenkels angeordnet. Auf diese Weise ist sichergestellt, daß die freien Enden der unteren U-Schenkel in Richtung zu den Fahrschienen weisen, während die Rückseite des U-Stegs im wesentlichen an seitlichen Begrenzungen des Fahrzeugtransporters anliegt. Die Anordnung und lösbare Befestigung der Arretiervorrichtungen erfolgt in ihrer Bereitschaftsstellung analog zu deren Gebrauchsstellung durch ihre Eingriffshaken. Entsprechende Öffnungen für die Eingriffshaken sind mit passendem Abstand in Längsrichtung des Fahrzeugtransporters angeordnet.

Um einen direkten Metall-Metall-Kontakt zwischen Arretiervorrichtungen und Fahrschienen zu vermeiden, weisen zumindest die Unterseiten der unteren U-Schenkel eine verschleißmindernde Kunststoffauflage auf.

Als Material für die Arretiervorrichtung sind entsprechende Metalle mit ausreichender Festigkeit, wie beispielsweise Stahl oder dergleichen, verwendbar. Die Kunststoffauflage ist aus an sich bekannten Kunststoffen, wie beispielsweise Polytetrafluorethylen oder dergleichen, herstellbar. Die Kunststoffauflage kann bei entsprechender Abnutzung erneuert werden.

Im folgenden wird ein vorteilhaftes Ausführungsbeispiel der Erfindung anhand der in der Zeichnung beigefügten Figuren näher erläutert und beschrieben.

Es zeigen:
- Fig. 1: eine Draufsicht auf die erfindungsgemäße Arretiervorrichtung;
- Fig. 2: eine Ansicht der Arretiervorrichtung nach Figur 1 aus Richtung II;
- Fig. 3: eine seitliche Ansicht der Arretiervorrichtung nach Figur 1 aus Richtung III; und
- Fig. 4: eine vereinfachte Vorderansicht auf einen Seitenarm der Arretiervorrichtung aus Figur 1 aus Richtung IV.

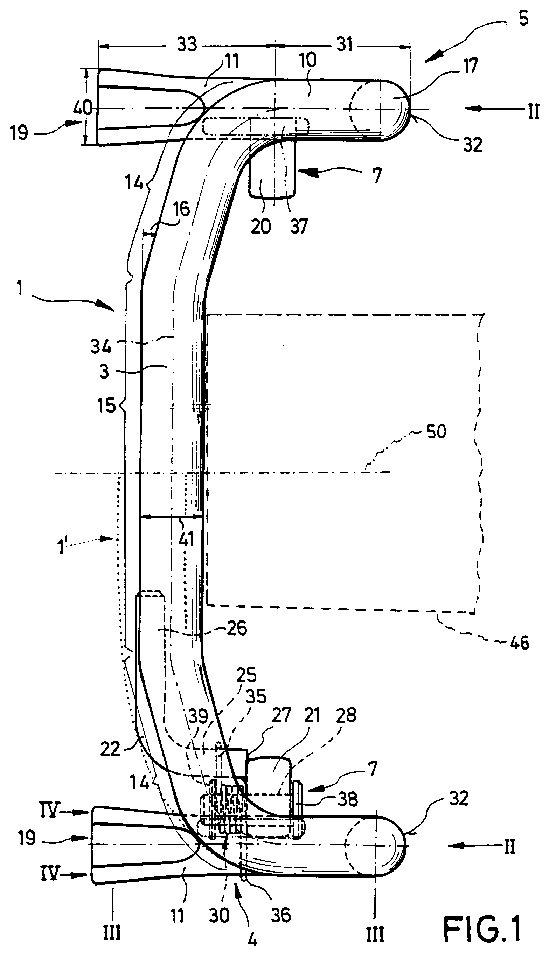

In Figur 1 ist eine Draufsicht auf die erfindungsgemäße Arretiervorrichtung 1 dargestellt. Diese umfaßt einen im wesentlichen horizontal angeordneten Sperrholm 3 und zwei von dessen Enden abstehende Seitenarme 4 und 5. Der Sperrholm 3 weist einen geraden Mittelabschnitt 15 und zwei gegenüber diesem um einen spitzen Horizontalwinkel 16 in Figur 1 nach rechts abgeknickte Endabschnitte 14 auf. Diese weisen im wesentlichen einen geradlinigen in Richtung Seitenarme 4 beziehungsweise 5 verlaufenden Teil und ein nach rechts gekrümmtes Endteil auf. An diese entsprechenden Endteile schließen sich einteilig die im wesentlichen senkrecht zum Mittelabschnitt 15 verlaufenden U-förmigen Seitenarme 4 beziehungsweise 5 an.

Sperrholm 3 und Seitenarme 4 beziehungsweise 5 sind aus einem rohrförmigen Profil mit konstantem Durchmesser hergestellt. Nur freie Enden 19 der Seitenarme 4 und 5 weisen gegenüber dem Durchmesser 41 des rohrförmigen Profils eine größere Breite 40 auf.

Die Seitenarme 4 und 5 schließen sich an die Endabschnitte 14 des Sperrholms 3 an, wobei sie nach rechts und in Blickrichtung nach Figur 1 nach hinten und darauffolgend nach links gekrümmt sind. Dabei sind die Seitenarme 4 und 5 U-förmig und umfassen einen oberen U-Schenkel 10, einen unteren U-Schenkel 11 und einen beide Schenkel verbindenden U-Steg 17. Der untere U-Schenkel 11 steht dabei mit seinem freien Ende 19 über den Mittelabschnitt 15 des Sperrholms 3 nach links vor.

Beide Seitenarme 4 und 5 sind gleich aufgebaut, wobei am Seitenarm 5 ein fester Eingriffshaken 20 und am Seitenarm 4 ein verschwenkbarer Eingriffshaken 21 angeordnet ist. Die Eingriffshaken 20 beziehungsweise 21 sind in einem Abstand 31 zu einer Rückseite 32 des U-Stegs 17 und in einem Abstand 33 zum freien Ende 19 des unteren U-Schenkels 11 angeordnet. Dabei ist der Abstand 33 größer als der Abstand 31.

Der verschwenkbare Eingriffshaken 21 ist am unteren U-Schenkel 11 des Seitenarms 4 um Schwenkachse 28 verschwenkbar gelagert. Diese ist zwischen vom U-Schenkel 11 abstehenden Flanschen 38 beziehungsweise 39 gehaltert. An einem nach links vorstehenden Endabschnitt der Schwenkachse 28 ist ein Federelement 30 konzentrisch zur Schwenkachse angeordnet. Das Federelement ist mit einem ersten Ende 35 an einem Verschwenkhebel 22 und mit einem zweiten Ende 36 am unteren U-Schenkel 11 festgelegt.

Erstes und zweites Ende 35 beziehungsweise 36 liegen von oben auf einem kürzeren L-Schenkel 25 des L-förmigen Verschwenkhebels 22 beziehungsweise von oben auf dem unteren U-Schenkel 11 auf und umfassen diese teilweise. Der L-förmige Verschwenkhebel 22 ist mit einem Ende 27 des kürzeren L-Schenkels 25 am verschwenkbaren Eingriffshaken 21 befestigt. Sein längerer L-Schenkel 26 verläuft im wesentlichen parallel zur Längsachse 34 des Mittelabschnitts 15 und unterhalb von diesem.

Im Bereich des Mittelabschnitts 15 ist ein teilweise dargesteller Vorderreifen eines nicht dargestellten Fahrzeugs mit dem Sperrholm in Anlage.

Bei einem anderen Ausführungsbeispiel für den Sperrholm weist dieser nicht gegenüber dem Mittelabschnitt 15 abgeknickte Endabschnitte 14 auf, sondern ist insgesamt von einer Mittelebene 50 mittig zwischen den Seitenarmen 4 und 5 in Richtung der Seitenarme in Figur 1 nach rechts gekrümmt, siehe den punktiert dargestellten Sperrholm 1'.

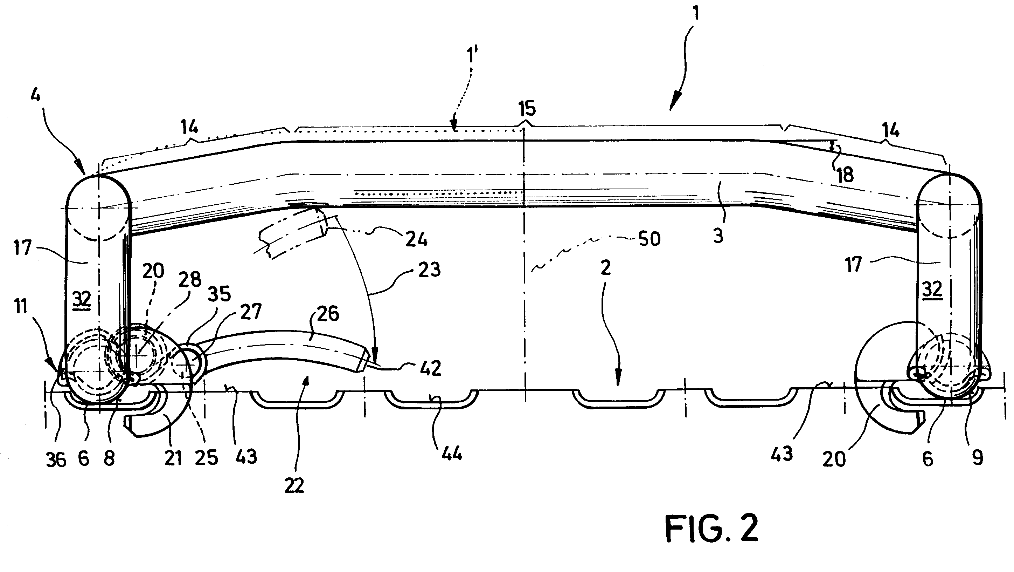

In Figur 2 ist die Arretiervorrichtung aus Figur 1 in einer Ansicht aus Richtung II dargestellt. Gleiche Teile sind mit gleichen Bezugszeichen versehen und werden nur noch teilweise erwähnt.

Im Gegensatz zu Figur 1 ist ein Teil einer Fahrschiene 2 dargestellt, an der die erfindungsgemäße Arretiervorrichtung 1 mittels der Eingriffshaken 20 und 21 lösbar befestigt ist. Zum Lösen des verschwenkbaren Eingriffshakens 21 ist der Verschwenkhebel 22 aus der dargestellten Eingriffsstellung 42 in eine teilweise dargestellte Öffnungsstellung 24 um Schwenkachse 28 verschwenkbar gelagert. Durch ein als Spiralfeder ausgebildetes Federelement 20 sind Eingriffshaken 21 und Verschwenkhebel 22 in Eingriffsrichtung 23 federbelastet. Erstes und zweites Ende 35 beziehungsweise 36 des Federelements 20 liegen von oben auf dem kürzeren L-Schenkel 25 beziehungsweise auf dem unteren U-Schenkel 11 des Seitenarms 4 auf und umfaßt diese teilweise.

Der U-Steg 17 beider Seitenarme geht in eine durch eine Unterseite 8 beziehungsweise 9 der unteren U-Schenkel gebildete Aufstandsfläche 6 über. Diese liegt auf einer Oberfläche 44 der Fahrschiene 2 auf. In der Oberfläche 44 sind eine Anzahl von Öffnungen 43 angeordnet. In zwei der Öffnungen greifen der feste Eingriffshaken 20 und der verschwenkbare Eingriffshaken 21 ein.

Der längere L-Schenkel 26 des Verschwenkhebels 22 ist in Richtung zum Sperrholm konvex gekrümmt. Das Ende 27 des kürzeren L-Schenkels steht teilweise seitlich über den Eingriffshaken 21 vor. In Öffnungsstellung 24 liegt ein freies Ende des längeren L-Schenkels 26 von unten am horizontal verlaufenden Mittelabschnitt 15 des Sperrholms 3 an. Dessen Endabschnitte 14 sind gegenüber dem Mittelabschnitt 15 nach unten unter einem spitzen Vertikalwinkel 18 in Richtung Fahrschiene 2 beziehungsweise in Richtung unterer U-Schenkel der Seitenarme geneigt. In der Darstellung nach Figur 2 verlaufen die Endabschnitte im wesentlichen geradlinig.

Bei dem anderen Ausführungsbeispiel des Sperrholms, siehe punktiert dargestellten Sperrholm 1', verläuft dieser gekrümmt nach unten in Richtung der Seitenarme 4 beziehungsweise 5. Wie bereits zu Figur 1 ausgeführt, weist der Sperrholm 1' nicht die gegenüber einem im wesentlichen geradlinigen Mittelabschnitt 15 nach unten abgeknickten Endabschnitte 14 auf. Stattdessen krümmt sich der Sperrholm 1' sowohl in horizontaler als auch vertikaler Richtung nach Figuren 1 und 2 stetig in Richtung der entsprechendem Seitenarme.

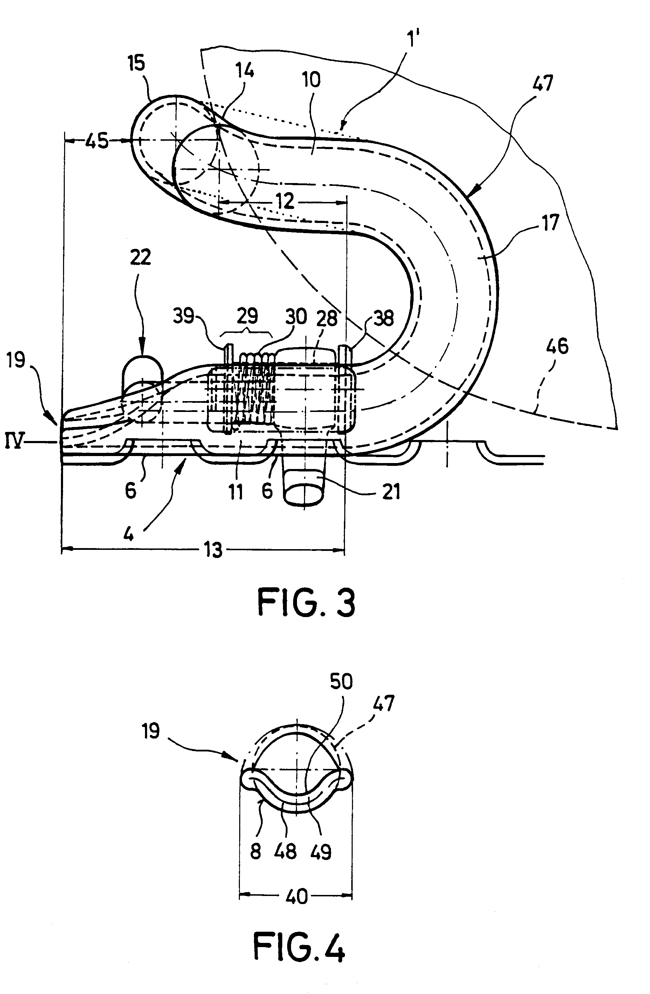

In Figur 3 ist die Arretiervorrichtung aus Figur 1 in einer seitlichen Ansicht aus Richtung III dargestellt. Gleiche Bezugszeichen kennzeichnen wiederum gleiche Teile und werden nur noch teilweise erwähnt.

Insbesondere ist erkennbar, daß der Vorderreifen 46 zwar mit dem Mittelabschnitt 15 in Anlage ist. Allerdings sind die Eingriffshaken so weit in Richtung des freien Endes 19 der Seitenarme 4 beziehungsweise 5 versetzt, daß der Vorderreifen 46 weder mit den Eingriffshaken 20 beziehungsweise 21 noch mit dem Verschwenkhebel 22 in Kontakt ist.

Der obere U-Schenkel 10 weist eine Länge 12 auf. Der untere U-Schenkel 11 weist eine Länge 13 auf. Zwischen den beiden U-Schenkeln 10 und 11 erstreckt sich in etwa halbkreisförmig der U-Steg 17. Die Länge 13 des unteren U-Stegs 11 ist größer als die Länge 12 des oberen U-Stegs 10. Dabei steht das freie Ende 19 des unteren U-Schenkels 11 um einen Abstand 45 gegenüber dem Mittelabschnitt 15 in Figur 3 nach links vor.

Der verschwenkbare Eingriffshaken 21 ist in seiner Eingriffsstellung angeordnet, so daß der Verschwenkhebel 22 in der entsprechenden Eingriffsstellung 42 nach Figur 2 angeordnet ist.

An den beiden Flanschen 38 und 39 ist die Schwenkachse 28 gehaltert. Benachbart zum Flansch 38 ist auf der Schwenkachse 28 der verschwenkbare Eingriffshaken 21 gelagert. Zwischen diesem und dem anderen Flansch 39 ist in einem Endabschnitt 29 die Spiralfeder 30 auf der Schwenkachse 28 aufgeschoben.

Wie bereits zu den Figuren 1 und 2 ausgeführt, kann bei einem anderen Ausführungsbeispiel der Erfindung, der punktiert dargestellte Sperrholm 1' bei der Arretiervorrichtung vorgesehen sein.

Wie in Figur 4 deutlicher zu sehen ist, ist der Endabschnitt 19 der unteren U-Schenkel 11 zusammengepreßt. Dadurch ist das rohrförmige Profil 47 verschlossen.

In Figur 4 ist eine Ansicht aus Richtung IV der Arretiervorrichtung nach Figur 1 beziehungsweise Figur 3 dargestellt.

Das rohrförmige Profil 47 mit kreisförmigem Querschnitt ist im Bereich des freien Endes 19 eines jeden unteren U-Schenkels 11 so zusammengepreßt, daß eine obere Hälfte 49 des Profils auf eine untere Hälfte 48 des Profils aufgedrückt ist. Die Breite 40 des Endabschnitts 19 ist größer als der Durchmesser 41 des rohrförmigen Profils 47, siehe beispielsweise Figur 1. Durch das Zusammendrücken von unterer und oberer Hälfte 48 und 49 ist das Profil an den freien Enden 19 der unteren U-Schenkel verschlossen, wobei auf der Oberseite der Schenkel eine Auskehlung 50 gebildet ist, die sich in etwa bis unterhalb der Endabschnitte 14 des Sperrholms 3 erstreckt, siehe auch Figur 1.

Während die aus Sperrholm 1 beziehungsweise 1' und Seitenarmen 4 und 5 hauptsächlich gebildete Arretiervorrichtung vorzugsweise einteilig aus einem rohrförmigen Profil gebogen wird, ist es genauso möglich, aus fertigungstechnischen Gründen beispielsweise die Arretiervorrichtung aus zwei durch Mittelebene 50 nach Figur 1 beziehungsweise 2 getrennten Teilen und die beiden Vorrichtungshälften nach ihrer Herstellung miteinander zu verbinden. Ebenso ist es möglich, Sperrholm und Seitenarme für sich aus einem rohrförmigen Profil herzustellen, und dann in entsprechender Weise miteinander zu verbinden.

## Patentansprüche

1. Arretiervorrichtung (1) zur lösbaren Befestigung an Fahrschienen (2) eines Fahrzeugtransporters mit einem im wesentlichen horizontal verlaufenden Sperrholm (3), zwei seitlich davon abstehenden Seitenarmen (4, 5), einer auf den Fahrschienen aufstellbaren Aufstandsfläche (6), und zwei Befestigungselementen (7; 20, 21), von denen wenigstens eines verschwenkbar gelagert ist,
**dadurch gekennzeichnet**,
daß Sperrholm (3) und Seitenarme (4, 5) einteilig aus einem rohrförmigen Profil gebildet sind.

2. Arretiervorrichtung nach Anspruch 1,
**dadurch gekennzeichnet**,
daß die Befestigungselemente (7; 20, 21) an den Seitenarmen (4, 5) angeordnet sind.

3. Arretiervorrichtung nach Anspruch 1 oder 2,
**dadurch gekennzeichnet**,
daß die Aufstandsfläche (6) durch Unterseiten (8, 9) der Seitenarme (4, 5) gebildet ist.

4. Arretiervorrichtung nach wenigstens einem der vorangehenden Ansprüche,
**dadurch gekennzeichnet**,
daß die Seitenarme (4, 5) im wesentlichen U-förmig gebogen sind, wobei ein oberer U-Schenkel (10) mit dem Sperrholm (3) verbunden ist und ein unterer U-Schenkel (11) auf seiner Unterseite (8, 9) die Aufstandsfläche (6) aufweist.

5. Arretiervorrichtung nach wenigstens einem der vorangehenden Ansprüche,
**dadurch gekennzeichnet**,
daß die Seitenarme (4, 5) im wesentlichen senkrecht vom Sperrholm (3) abstehen.

6. Arretiervorrichtung nach wenigstens einem der vorangehenden Ansprüche,
**dadurch gekennzeichnet**,
daß der untere U-Schenkel (11) länger als der obere U-Schenkel (10) ist.

7. Arretiervorrichtung nach wenigstens einem der vorangehenden Ansprüche,
**dadurch gekennzeichnet**,
daß der Sperrholm (3) in Richtung der Seitenarme (4, 5) nach unten und/oder hinten in Richtung U-Steg (17) der Seitenarme (4, 5) gekrümmt ist.

8. Arretiervorrichtung nach wenigstens einem der vorangehenden Ansprüche,
**dadurch gekennzeichnet**,
daß der Sperrholm (3) symmetrisch zu einer mittig zwischen den Seitenarmen (4, 5) verlaufenden Mittelebene ausgebildet ist.

9. Arretiervorrichtung nach wenigstens einem der vorangehenden Ansprüche,
**dadurch gekennzeichnet**,
daß Endabschnitte (14) des Sperrholms (3) gegenüber seinem Mittelabschnitt (15) unter einem spitzen Horizontalwinkel (16) in Richtung U-Steg (17) der Seitenarme (4, 5) geneigt verlaufen.

10. Arretiervorrichtung nach wenigstens einem der vorangehenden Ansprüche,
**dadurch gekennzeichnet**,
daß der Horizontalwinkel (16) 5° bis 25°, vorzugsweise 15° beträgt.

11. Arretiervorrichtung nach wenigstens einem der vorangehenden Ansprüche,
**dadurch gekennzeichnet**,
daß Endabschnitte (4) des Sperrholms (3) gegenüber seinem Mittelabschnitt (15) unter einem spitzen Vertikalwinkel (18) in richtung zum unteren U-Schenkel (11) geneigt verlaufen.

12. Arretiervorrichtung nach wenigstens einem der vorangehenden Ansprüche,
**dadurch gekennzeichnet**,
daß der Vertikalwinkel 0° bis 20°, vorzugsweise 10° beträgt.

13. Arretiervorrichtung nach wenigstens einem der vorangehenden Ansprüche,
**dadurch gekennzeichnet**,
daß ein freies Ende (19) des unteren U-Schenkel (11) über den Mittelabschnitt (15) des Sperrholms (3) vorsteht.

14. Arretiervorrichtung nach wenigstens einem der vorangehenden Ansprüche,
**dadurch gekennzeichnet**,
daß das freie Ende (19) des unteren U-Schenkels (11) flachgedrückt ist.

15. Arretiervorrichtung nach wenigstens einem der vorangehenden Ansprüche,
**dadurch gekennzeichnet**,
daß die Befestigungselemente (7; 20, 21) als Eingriffshaken (20, 21) ausgebildet sind.

16. Arretiervorrichtung nach wenigstens einem der vorangehenden Ansprüche,
**dadurch gekennzeichnet**,
daß die Eingriffshaken (20, 21) zumindest teilweise über die Aufstandsfläche (6) nach unten in Richtung Fahrschiene (2) vorstehen.

17. Arretiervorrichtung nach wenigstens einem der vorangehenden Ansprüche,
**dadurch gekennzeichnet**,
daß ein Verschwenkhebel (22) am verschwenkbaren Eingriffshaken (21) angeordnet ist.

18. Arretiervorrichtung nach wenigstens einem der vorangehenden Ansprüche,
**dadurch gekennzeichnet**,
daß der Eingriffshaken (20, 21) am unteren U-Schenkel (11) angeordnet, beziehungsweise verschwenkbar gelagert ist.

19. Arretiervorrichtung nach wenigstens einem der vorangehenden Ansprüche,
**dadurch gekennzeichnet**,
daß der verschwenkbare Eingriffshaken (21) in Eingriffsrichtung (23) federbelastet ist.

20. Arretiervorrichtung nach wenigstens einem der vorangehenden Ansprüche,
**dadurch gekennzeichnet**,
daß der Verschwenkhebel (22) im wesentlichen L-förmig ist, wobei der kürzere L-Schenkel (25) am Eingriffshaken (21) befestigt ist.

21. Arretiervorrichtung nach wenigstens einem der vorangehenden Ansprüche,
**dadurch gekennzeichnet**,
daß ein freies Ende (27) des kürzeren L-Schenkels (25) seitlich am Eingriffshaken (21) befestigt ist.

22. Arretiervorrichtung nach wenigstens einem der vorangehenden Ansprüche,
**dadurch gekennzeichnet**,
daß der längere L-Schenkel (26) des Verschwenkhebels (22) in Eingriffsstellung parallel zum Mittelabschnitt (15) des Sperrholms (3) verläuft.

23. Arretiervorrichtung nach wenigstens einem der vorangehenden Ansprüche,
**dadurch gekennzeichnet**,
daß der längere L-Schenkel (26) in Öffnungsstellung (24) des verschwenkbaren Eingriffshakens (21) von unten am Mittelabschnitt (15) anliegt.

24. Arretiervorrichtung nach wenigstens einem der vorangehenden Ansprüche,
**dadurch gekennzeichnet**,
daß der verschwenkbare Eingriffshaken (21) an einer von dem unteren U-Schenkel (11) gehalterten Schwenkachse (28) gelagert ist.

25. Arretiervorrichtung nach wenigstens einem der vorangehenden Ansprüche,
**dadurch gekennzeichnet**,
daß die Schwenkachse (28) zumindest mit einem Endabschnitt (29) benachbart zum kürzeren L-Schenkel (25) des Verschwenkhebels (22) über den Eingriffshaken (21) vorsteht und an diesem Endabschnitt ein Federelement (30) zur Federbelastung des Eingriffshakens (21) in Eingriffsrichtung (23) angeordnet ist.

26. Arretiervorrichtung nach wenigstens einem der vorangehenden Ansprüche,
**dadurch gekennzeichnet**,
daß das Federelement (30) als eine zwischen kurzem L-Schenkel (25) und unterem U-Schenkel festgelegte Spiralfeder ausgebildet ist.

27. Arretiervorrichtung nach wenigstens einem der vorangehenden Ansprüche,
**dadurch gekennzeichnet**,
daß die Eingriffshaken (20, 21) in einem geringeren Abstand (31, 33) zur Rückseite (32) des U-Stegs (17) als zum freien Ende (19) des unteren U-Schenkels (11) angeordnet sind.

28. Arretiervorrichtung nach wenigstens einem der vorangehenden Ansrpüche,
**dadurch gekennzeichnet**,
daß zumindest die Unterseite des unteren U-Schenkels (11) eine verschleißmindernde Kunststoffauflage aufweist.

## Claims

1. Stop device (1) for releasable attachment to deck rails (2) of a vehicle transporter, with an essentially horizontal stop bar (3), two side arms (4, 5) projecting laterally therefrom, a rest surface (6) which can be placed on the deck rails, and two attachment elements (7; 20, 21) at least one of which is pivotably mounted,
characterized in that
the stop bar (3) and side arms (4, 5) are formed in one piece from metal tube.

2. Stop device according to Claim 1,
characterized in that
the attachment elements (7; 20, 21) are arranged on the side arms (4, 5).

3. Stop device according to Claim 1 or Claim 2,
characterized in that
the rest surface (6) is formed by the underside (8, 9) of the side arms (4, 5).

4. Stop device according to at least one of the preceding claims,
characterized in that
the side arms (4, 5) are bent essentially in a U shape, the upper limb (10) of the U being joined to the stop bar (3) and the lower limb (11) of the U having the rest surface (6) on its underside (8, 9).

5. Stop device according to at least one of the preceding claims,
characterized in that
the side arms (4, 5) project essentially at right angles to the stop bar (3).

6. Stop device according to at least one of the preceding claims,
characterized in that
the lower limb (11) of the U is longer than the upper limb (10) thereof.

7. Stop device according to at least one of the preceding claims,
characterized in that
towards the side arms (4, 5) the stop bar (3) is bent downwards and/or rearwards towards the U-bend (17) of the side arms (4, 5).

8. Stop device according to at least one of the preceding claims,
characterized in that
the stop bar (3) is formed symmetrically with respect to a centre plane extending centrally between the side arms (4, 5).

9. Stop device according to at least one of the preceding claims,
characterized in that
end sections (14) of the stop bar (3) are angled towards the U-bend (17) of the side arms (4, 5) at an acute horizontal angle (16) to the centre section (15) of the stop bar.

10. Stop device according to at least one of the preceding claims,
characterized in that
the horizontal angle (16) is 5° to 25°, preferably 15°.

11. Stop device according to at least one of the preceding claims,
characterized in that
end sections (14) of the stop bar (3) are angled towards the lower limb (11) of the U at an acute vertical angle (18) to the centre section (15) of the stop bar.

12. Stop device according to at least one of the preceding claims,
characterized in that
the vertical angle is 0° to 20°, preferably 10°.

13. Stop device according to at least one of the preceding claims,
characterized in that
the free end (19) of the lower limb (11) of the U projects beyond the centre section (15) of the stop bar (3).

14. Stop device according to at least one of the preceding claims,
characterized in that
the free end (19) of the lower limb (11) of the U is pressed flat.

15. Stop device according to at least one of the preceding claims,
characterized in that
the attachment elements (7; 20, 21) are formed as catch hooks (20, 21).

16. Stop device according to at least one of the preceding claims,
characterized in that
the catch hooks (20, 21) project downwards towards the deck rail (2) at least partly beyond the rest surface (6).

17. Stop device according to at least one of the preceding claims,
characterized in that
a lever (22) is arranged on the pivotable catch hook (21).

18. Stop device according to at least one of the preceding claims,
characterized in that
the catch hook (20, 21) is arranged, and if appropriate pivotably mounted, on the lower limb (11) of the U.

19. Stop device according to at least one of the preceding claims,
characterized in that
the pivotable catch hook (21) is spring loaded in the engagement direction (23).

20. Stop device according to at least one of the preceding claims,
characterized in that
the lever (22) is essentially L-shaped, the shorter leg (25) of the L being attached to the catch hook (21).

21. Stop device according to at least one of the preceding claims,
characterized in that
the free end (27) of the shorter leg (25) of the L is laterally fixed to the catch hook (21).

22. Stop device according to at least one of the preceding claims,
characterized in that
the longer leg (26) of the L-shaped lever (22) extends parallel with the centre section (15) of the stop bar (3) when in the engaged position.

23. Stop device according to at least one of the preceding claims,
characterized in that
the longer leg (26) of the L rests on the underside of the centre section (15) when the pivotable catch hook (21) is in the open position (24).

24. Stop device according to at least one of the preceding claims,
characterized in that
the pivotable catch hook (21) is mounted on a pivot pin (28) carried by the lower limb (11) of the U.

25. Stop device according to at least one of the preceding claims,
characterized in that
the pivot pin (28) projects, at-least in an end section (29) adjacent to the shorter leg (25) of the L-shaped lever (22), beyond the catch hook (21), and a spring element (30) is arranged on this end section to spring load the catch hook (21) in the engagement direction (23).

26. Stop device according to at least one of the preceding claims,
characterized in that
the spring element (30) is formed as a spiral spring held between the short leg (25) of the L and the lower limb of the U.

27. Stop device according to at least one of the preceding claims,
characterized in that
the catch hooks (20, 21) are located at a shorter distance (31, 33) from the back (32) of the U-bend (17) than from the free end (19) of the lower limb (11) of the U.

28. Stop device according to at least one of the preceding claims,
characterized in that
at least the underside of the lower limb (11) of the U has a wear-resistant plastic coating.

## Revendications

1. Dispositif d'arrêt (1) destiné à être fixé de manière amovible à des rails (2) d'un transporteur de véhicules, comportant une barre de blocage (3) s'étendant sensiblement horizontalement, deux bras latéraux (4, 5) partant latéralement de celle-ci, une surface d'appui (6) pouvant être appliquée sur les rails, et deux éléments de fixation (7 ; 20, 21) dont au moins un est monté basculant, caractérisé par le fait que la barre de blocage (3) et les bras latéraux (4, 5) sont formés d'une seule pièce à partir d'un profilé tubulaire.

2. Dispositif d'arrêt selon la revendication 1, caractérisé par le fait que les éléments de fixation (7 ; 20, 21) sont placés sur les bras latéraux (4, 5).

3. Dispositif d'arrêt selon l'une des revendications 1 et 2, caractérisé par le fait que la surface d'appui (6) est formée par des côtés inférieurs (8, 9) des bras latéraux (4, 5).

4. Dispositif d'arrêt selon au moins une des revendications précédentes, caractérisé par le fait que les bras latéraux (4, 5) sont courbés sensiblement en forme de U, une branche de U supérieure (10) étant jointe à la barre de blocage (3) et une branche de U inférieure (11) présentant la surface d'appui (6) sur son côté inférieur (8, 9).

5. Dispositif d'arrêt selon au moins une des revendications précédentes, caractérisé par le fait que les bras latéraux (4, 5) partent sensiblement à angle droit de la barre de blocage (3).

6. Dispositif d'arrêt selon au moins une des revendications précédentes, caractérisé par le fait que la branche de U inférieure (11) est plus longue que la branche de U supérieure (10).

7. Dispositif d'arrêt selon au moins une des revendications précédentes, caractérisé par le fait que la barre de blocage (3) est courbée en direction des bras latéraux (4, 5) vers le bas et/ou vers l'arrière en direction de la base de U (17) des bras latéraux (4, 5).

8. Dispositif d'arrêt selon au moins une des revendications précédentes, caractérisé par le fait que la barre de blocage (3) est symétrique par rapport à un plan médian s'étendant au milieu entre les bras latéraux (4, 5).

9. Dispositif d'arrêt selon au moins une des revendications précédentes, caractérisé par le fait que des tronçons d'extrémité (14) de la barre de blocage (3) sont inclinés par rapport au tronçon central (15) de celle-ci d'un angle horizontal aigu (16) en direction de la base de U (17) des bras latéraux (4, 5).

10. Dispositif d'arrêt selon au moins une des revendications précédentes, caractérisé par le fait que l'angle horizontal (16) est de 5° à 25°, de préférence de 15°.

11. Dispositif d'arrêt selon au moins une des revendications précédentes, caractérisé par le fait que des tronçons d'extrémité (14) de la barre de blocage (3) sont inclinés par rapport au tronçon central (15) de celle-ci d'un angle vertical aigu (18) en direction de la branche de U inférieure (11).

12. Dispositif d'arrêt selon au moins une des revendications précédentes, caractérisé par le fait que l'angle vertical est de 0° à 20°, de préférence de 10°.

13. Dispositif d'arrêt selon au moins une des revendications précédentes, caractérisé par le fait qu'une extrémité libre (19) de la branche de U inférieure (11) dépasse le tronçon central (15) de la barre de blocage (3).

14. Dispositif d'arrêt selon au moins une des revendications précédentes, caractérisé par le fait que l'extrémité libre (19) de la branche de U inférieure (11) est aplatie.

15. Dispositif d'arrêt selon au moins une des revendications précédentes, caractérisé par le fait que les éléments de fixation (7 ; 20, 21) sont des crochets d'engagement (20, 21).

16. Dispositif d'arrêt selon au moins une des revendications précédentes, caractérisé par le fait que les crochets d'engagement (20, 21) dépassent au moins en partie la surface d'appui (6) vers le bas en direction du rail (2).

17. Dispositif d'arrêt selon au moins une des revendications précédentes, caractérisé par le fait qu'un levier basculant (22) est placé sur le crochet basculant d'engagement (21).

18. Dispositif d'arrêt selon au moins une des revendications précédentes, caractérisé par le fait que le crochet d'engagement (20, 21) est placé ou monté basculant sur la branche de U inférieure (11).

19. Dispositif d'arrêt selon au moins une des revendications précédentes, caractérisé par le fait que le crochet basculant d'engagement (21) est chargé élastiquement dans la direction d'engagement (23).

20. Dispositif d'arrêt selon au moins une des revendications précédentes, caractérisé par le fait que le levier basculant (22) est sensiblement en forme de L, la branche de L courte (25) étant fixée au crochet d'engagement (21).

21. Dispositif d'arrêt selon au moins une des revendications précédentes, caractérisé par le fait qu'une extrémité libre (27) de la branche de L courte (25) est fixée latéralement au crochet d'engagement (21).

22. Dispositif d'arrêt selon au moins une des revendications précédentes, caractérisé par le fait que la branche de L longue (26) du levier basculant (22), en position d'engagement, est parallèle au tronçon central (15) de la barre de blocage (3).

23. Dispositif d'arrêt selon au moins une des revendications précédentes, caractérisé par le fait que la branche de L longue (26), dans la position ouverte (24) du crochet basculant d'engagement (21), s'appuie d'en bas sur le tronçon central (15).

24. Dispositif d'arrêt selon au moins une des revendications précédentes, caractérisé par le fait que le crochet basculant d'engagement (21) est monté sur un axe de basculement (28) supporté par la branche de U inférieure (11).

25. Dispositif d'arrêt selon au moins une des revendications précédentes, caractérisé par le fait que l'axe de basculement (28) dépasse au moins par une partie d'extrémité (29), à proximité de la branche de L courte (25) du levier basculant (22), du crochet d'engagement (21), et sur cette partie d'extrémité est placé un élément élastique (30) pour le chargement élastique du crochet d'engagement (21) dans la direction d'engagement (23).

26. Dispositif d'arrêt selon au moins une des revendications précédentes, caractérisé par le fait que l'élément élastique (30) est un ressort hélicoïdal fixé entre la branche de L courte (25) et la branche de U inférieure.

27. Dispositif d'arrêt selon au moins une des revendications précédentes, caractérisé par le fait que les crochets d'engagement (20, 21) sont placés à une plus faible distance (31, 33) du côté arrière (32) de la base de U (17) que de l'extrémité libre (19) de la branche de U inférieure (11).

28. Dispositif d'arrêt selon au moins une des revendications précédentes, caractérisé par le fait qu'au moins le côté inférieur de la branche de U inférieure (11) présente un revêtement en plastique qui réduit l'usure.
